# EUROPÄISCHE PATENTSCHRIFT

(11) **EP 3 286 112 B1**
(45) Veröffentlichungstag und Bekanntmachung des Hinweises auf die Patenterteilung: **31.07.2019**
(21) Anmeldenummer: 16705786.8
(22) Anmeldetag: 23.02.2016
(51) Int. Cl.: B65G 15/32

(54) **FÖRDERANLAGE MIT BELASTUNGSOPTIMIERTEM FÖRDERGURT**
CONVEYING INSTALLATION HAVING A LOAD-OPTIMIZED CONVEYOR BELT
INSTALLATION DE TRANSPORT DOTÉE D'UNE BANDE TRANSPORTEUSE À CHARGE OPTIMISÉE

(30) Priorität: 22.04.2015 DE 102015207263
(43) Veröffentlichungstag der Anmeldung: 28.02.2018
(73) Patentinhaber: ContiTech Transportbandsysteme GmbH, 30165 Hannover (DE)
(72) Erfinder: HENNING, Katja, 37077 Göttingen (DE); CERVERA, Daniel, 50259 Pulheim (DE); SCHRAND, Wilhelm, 31319 Sehnde (DE)
(74) Vertreter: Preusser, Andrea
(86) Internationale Anmeldenummer: PCT/EP2016/053703
(87) Internationale Veröffentlichungsnummer: WO 2016/169673

(56) Entgegenhaltungen:
- EP-A1- 2 604 551
- DE-B- 1 010 727
- DE-C1- 4 121 572

## Beschreibung

Die Erfindung betrifft eine Förderanlage mit einem Fördergurt, umfassend eine tragseitige und laufseitige Deckplatte, sowie ferner mit Trommeln, Tragrollen und mit Traggerüsten. Derartige Förderanlagen sind unter anderem aus DE 36 06 129 A, EP 1 187 781 B1, DE 36 12 765 A1, EP 1 222 126 B1, DE 43 33 839 B4, WO 2005/023688 A1, EP 0 336 385 B1, WO 2008/034483 A1, EP 1 053 447 B1 oder US 7 178 663 B2 bekannt.

Die tragseitige und laufseitige Deckplatte eines Fördergurtes bilden in der Regel den Kernbauteil einer Förderanlage und können aus einer Folie oder einem Gewebe oder bevorzugt aus einer Kautschukmischung bestehen.

Teilweise wird für die tragseitige Deckplatte (=Tragseite) ein anderes Material verwendet als für die laufseitige Deckplatte (=Laufseite).

Sowohl die Tragseite als auch die Laufseite können jeweils ein- oder mehrlagig ausgebildet sein, wobei sich die Lagen in der Regel über die gesamte Breite des Gurtes erstrecken. Die Gurtbreite kann hierbei gesamt oder teilweise noch mit einer Beschichtung versehen sein, siehe bspw. DE 102010060574A1. Für den Betrieb einer Förderanlage mit einem Fördergurt ist insbesondere für den Energieaufwand, den Rollwiderstand und den Abrieb über die Umlenkrollen und Trommeln die Laufseite von Bedeutung. In US2013/0081929A1 wird hierzu zum Beispiel die Laufseite in verschiedene Abschnitte unterteilt.

Die Oberfläche der Tragseite, welche mit dem Fördergut in Kontakt kommt bzw. steht, wird häufig mit einer Beschichtung versehen. Eine derartige Beschichtung erfordert zusätzlichen Konfektionsaufwand und birgt die Gefahr, dass sie sich nach einiger Zeit ablöst bzw. nach einiger Zeit abgenutzt ist und dann nicht mehr wirkt. Bisher wurde nur wenig auf die unterschiedlichen, insbesondere mechanischen, Belastungen in den verschiedenen Bereichen der Tragseite eingegangen. So findet zum Beispiel die Beladung mit Schüttgut vorwiegend im mittleren Bereich statt, während es an den seitlichen Bereichen durch Schurren o.ä. zu Abschleiferscheinungen kommen kann. Das Dokument EP 2 604 551 A1 offenbart eine Förderanlage nach dem Oberbegriff des Anspruchs 1.

Die Aufgabe der vorliegenden Erfindung besteht daher darin, eine Förderanlage bereitzustellen, deren Fördergurt sich durch eine belastungsoptimierte tragseitige Deckplatte auszeichnet.

Diese Aufgabe wird erfindungsgemäß durch die Merkmale des Anspruchs 1 gelöst.

Überraschenderweise wurde festgestellt, dass bei einer derartigen Ausgestaltung der Tragseite, der Fördergurt für verschiedene Belastungen unter individuellen Einsatzbedingungen zugeschnitten werden kann. So kann bspw. der mittlere Bereich der Tragseite aus einer Kautschukmischung bestehen, welche besonders aufschlagbeständig ist, während die seitlichen Bereiche jeweils mit einer abriebfesten und / oder kostengünstigen Kautschukmischung versehen sein können. Dies erhöht die Lebensdauer des Gesamtgurtes und kann auch zu geringeren Herstellkosten führen.

Im Bereich von etwaigen Muldungsknicken können bspw. elastischere Kautschukmischungen eingesetzt werden, um Rissbildungen in diesen Bereichen vorzubeugen. Hier ist es durch die erfindungsgemäße Ausgestaltung möglich, individuell auf Kundenanforderungen und Gegebenheiten des zu transportierenden Förderguts einzugehen.

Die Erfindung ist grundsätzlich für alle Förderanlagen und Fördergurte geeignet. Zu nennen sind hier insbesondere herkömmliche Stahlseilfördergurte und Textilfördergurte. Ebenso kann die Erfindung für so genannte Rohrfördergurte, die Festigkeitsträger aus Stahl oder Textil enthalten können, eingesetzt werden. Erfindungsgemäß wird wenigstens die oberste Lage der Tragseite über die gesamte Breite des Fördergurtes in wenigstens zwei Bereiche, die auch als Zonen bezeichnet werden können, aufgeteilt. Diese beiden Bereiche bestehen aus jeweils einer Kautschukmischung, die sich qualitativ und / oder quantitativ voneinander unterscheiden. Vorzugsweise wird die Gesamtbreite der obersten Lage der Tragseite in drei Bereiche aufgeteilt. Einen mittleren Bereich und zwei Seitenbereiche jeweils rechts und links von diesem mittleren Bereich. Der mittlere Bereich besteht aus einer anderen Kautschukmischung als die beiden Seitenbereiche. Es ist aber auch möglich, dass die beiden Seitenbereiche aus voneinander verschiedenen Kautschukmischungen bestehen.

Erfindungsgemäß wird die Tragseite über die Gesamtbreite des Fördergurtes zweilagig ausgebildet, wobei die oberste Lage, die in Kontakt mit dem Fördergut steht, aus einem mittleren Bereich und zwei Seitenbereichen ausgestaltet ist, wobei sich die Kautschukmischung des mittleren Bereiches von der Kautschukmischung für den rechten und den linken Seitenbereich qualitativ und / oder quantitativ unterscheidet. Die Kautschukmischung für den Seitenbereich ist wiederum rechts und links identisch.

Die untere Lage der Tragseite über die Gesamtbreite des Fördergurtes besteht aus einer Kautschukmischung, die sich von den Kautschukmischungen aller Bereiche der obersten Lage der Decklage unterscheidet. Die jeweilige Kautschukmischung enthält wenigstens einen Kautschuk.

Dieser ist bevorzugt ausgewählt aus der Gruppe, bestehend aus natürlichem Polyisopren (NR) und / oder synthetischem Polyisopren (IR) und / oder Butadienkautschuk (BR) und / oder Chloropren-Kautschuk (CR) und / oder Styrol-Butadien-Kautschuk (SBR) und / oder Nitrilkautschuk (NBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder Chlorsulfonierter Polyethylenkautschuk (CSM) und / oder Silikonkautschuk (MVQ) und / oder Fluorkautschuk (FPM).

Die genannten Kautschuke können hierbei alleine oder im Verschnitt eingesetzt werden.

Die jeweilige Kautschukmischung kann zusätzlich noch Füllstoffe, wie beispielsweise Ruße, Kieselsäure, Aluminiumoxide, Alumosilicate, Schichtsilikate, Kreide, Stärke, Magnesiumoxid, Kohlenstoffnanoröhren, Aluminiumhydroxid, Talk, Titandioxid oder Kautschukgele, in üblichen Mengen enthalten.

Des Weiteren kann die jeweilige Kautschukmischung übliche Zusatzstoffe in üblichen Gewichtsteilen enthalten. Zu diesen Zusatzstoffen zählen z. B. Weichmacher, Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie der fachkundigen Person bekannt sind, Verarbeitungshilfsmittel wie z. B. Zinkoxid und Fettsäuren, wie Stearinsäure, sonstige Zusatzstoffe (z.B. Fasern, Farbpigmente), Wachse und Mastikationshilfsmittel.

Die Vulkanisation der jeweiligen in der Tragseite verarbeiteten Kautschukmischung wird vorzugsweise in Anwesenheit von elementarem Schwefel oder Schwefelspendern durchgeführt, wobei einige Schwefelspender zugleich als Vulkanisationsbeschleuniger wirken können. Elementarer Schwefel oder Schwefelspender werden im letzten Mischungsschritt in den vom Fachmann gebräuchlichen Mengen (0,4 bis 9 phr, elementarer Schwefel bevorzugt in Mengen von 0 bis 6 phr, besonders bevorzugt in Mengen von 0,1 bis 3 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren enthalten. Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Es ist aber auch möglich für die Vulkanisation weitere, der fachkundigen Person bekannte Verfahren, wie Strahlenvernetzung, peroxidische Vernetzung, etc. alleine oder in Kombination zu verwenden.

Der Fördergurt ist zumeist noch mit einem eingebetteten Zugträger versehen. Als Zugträger kommen in Fördergurtlängsrichtung parallel verlaufende Seile aus Stahl zum Einsatz. Der Zugträger kann aber auch ein einlagiges oder mehrlagiges textiles Gebilde, insbesondere in Form eines Gewebes, bevorzugt bestehend aus Baumwolle und / oder Polyamid und / oder Polyester und / oder Aramid und / oder Glas und / oder Basalt und / oder Stahl sein. Die genannten Werkstoffe können alleine oder in Form von Hybridzugträgern, welche aus wenigstens einem der genannten Werkstoffe aufgebaut sind, eingesetzt werden.

In die tragseitige und/oder laufseitige Deckplatte können zudem noch folgende Bauteile eingebettet sein: Breaker, Leiterschleifen, Transponder, Barcodes, eine Polymermatrix mit eingemischten detektierbaren Teilchen oder andere detektierbare Elemente.

Der Fördergurt kann noch mit einem Aufbauteil, beispielsweise mit einem Mitnehmerteil, Führungsteil sowie mit Rand- und Seitenwandprofilen versehen sein. Derartige Aufbauteile bestehen aus einem polymeren Werkstoff (Elastomer, Thermoplastisches Elastomer, Thermoplast) und werden fußseitig mit der tragseitigen Oberfläche des elastischen Fördergurtes verklebt und / oder vulkanisiert.

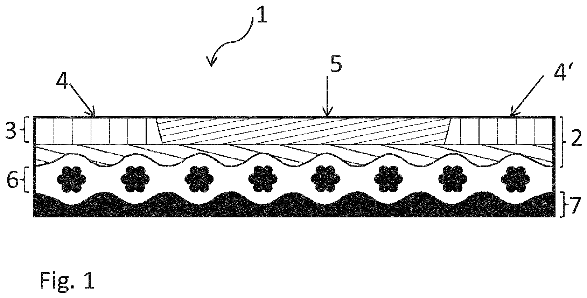

Die einzige Figur 1 zeigt einen Querschnitt durch einen Fördergurt 1 bei dem die tragseitige Deckplatte 2 zweilagig ausgebildet ist. Die äußere Lage 3 der tragseitigen Deckplatte 2 umfasst hierbei einen mittleren Bereich 5 und zwei Seitenbereiche 4, 4'. Die Kautschukmischungen des mittleren Bereichs 5 unterscheidet sich von der Kautschukmischung der Seitenbereiche 4, 4' in qualitativer und / oder quantitativer Hinsicht. Die Kautschukmischungen der Seitenbereiche 4, 4' können hierbei auch qualitativ und / oder quantitativ gleich oder verschieden voneinander sein.

### Bezugszeichenliste

### (Teil der Beschreibung)

- 1: Fördergurt
- 2: tragseitige Deckplatte
- 3: äußere Lage der tragseitigen Deckplatte
- 4, 4': Seitenbereiche
- 5: mittlerer Bereich
- 6: Karkasse
- 7: laufseitige Deckplatte

## Patentansprüche

1. Förderanlage mit einem Fördergurt (1), enthaltend eine tragseitige Deckplatte (2) und eine laufseitige Deckplatte (7), sowie ferner mit Trommeln, Tragrollen und mit Traggerüsten, **dadurch gekennzeichnet, dass** die tragseitige Deckplatte (2) des Fördergurtes zweilagig ausgebildet ist, wobei die oberste Lage (3) der tragseitigen Deckplatte (2), welche sich in direktem Kontakt zum Fördergut befindet, über die Gesamtbreite des Fördergurtes aus wenigstens zwei qualitativ und / oder quantitativ verschiedenen Kautschukmischungen aufgebaut ist.

2. Förderanlage nach Anspruch 1, **dadurch gekennzeichnet, dass** die oberste Lage (3) der tragseitigen Deckplatte (2) über die Gesamtbreite des Fördergurtes in drei Bereiche aufgeteilt ist, wobei es sich um einen mittleren Bereich (5) und um zwei Seitenbereiche (4, 4') handelt und wobei die Kautschukmischung des mittleren Bereiches (5) qualitativ und / oder quantitativ verschieden von der Kautschukmischung der zwei Seitenbereiche (4, 4') ist.

## Claims

1. Conveying installation having a conveyor belt (1), containing a carrying-side cover panel (2) and a running-side cover panel (7), and also having drums, supporting rollers and supporting structures, **characterized in that** the carrying-side cover panel (2) of the conveyor belt is of two-layered design, wherein the uppermost layer (3) of the carrying-side cover panel (2), said layer being in direct contact with the material conveyed, is made up, as seen over the entire width of the conveyor belt, of at least two rubber mixtures which differ in terms of quality and/or quantity.

2. Conveying installation according to Claim 1, **characterized in that** the uppermost .layer (3) of the carrying-side cover panel (2) is divided up, as seen over the entire width of the conveyor belt, into three regions, wherein these regions are constituted by a central region (5) and two side regions (4, 4'), and wherein the rubber mixture of the central region (5) differs in terms of quality and/or quantity from the rubber mixture of the two side regions (4, 4').

## Revendications

1. Installation de transport comprenant une bande transporteuse (1) contenant une plaque de recouvrement (2) côté porteur et une plaque de recouvrement (7) côté roulement, et comprenant en outre des tambours, des rouleaux de support et des structures de support, **caractérisée en ce que** la plaque de recouvrement (2) côté porteur de la bande transporteuse est réalisée avec deux couches, la couche supérieure (3) de la plaque de recouvrement (2) côté porteur, qui est en contact direct avec le produit transporté, étant constituée sur toute la largeur de la bande transporteuse d'au moins deux mélanges de caoutchouc différents en termes de qualité et/ou de quantité.

2. Installation de transport selon la revendication 1, **caractérisée en ce que** la couche supérieure (3) de la plaque de recouvrement (2) côté porteur est divisée sur toute la largeur de la bande transporteuse en trois régions, une région centrale (5) et deux régions latérales (4, 4') et le mélange de caoutchouc de la région centrale (5) étant différent, en termes de qualité et/ou de quantité, du mélange de caoutchouc des deux régions latérales (4, 4').
